# EUROPEAN PATENT APPLICATION

(11) **EP 3 828 862 A1**
(43) Date of publication of application: **02.06.2021**
(21) Application number: 19855816.5
(22) Date of filing: 28.08.2019
(51) Int. Cl.: G08G 1/00, G08B 21/02, G08B 25/10, G08G 1/123

(54) **APPARATUS AND METHOD FOR PROVIDING RISK INFORMATION BY USING MOBILE ID GROUP INFORMATION**

(30) Priority: 28.08.2018 KR 20180101327; 26.08.2019 KR 20190104737
(71) Applicant: Lee, Do-Hun, Gwangyang-si, Jeollanam-do 57738 (KR)
(72) Inventor: LEE, Ju-Sang, Gwangyang-si, Jeollanam-do 57738 (KR); CHON, Jeong-Seo, Gwangyang-si, Jeollanam-do 57738 (KR); LEE, Do-Hun, Gwangyang-si, Jeollanam-do 57738 (KR)
(74) Representative: Wittmer, Maximilian
(86) International application number: PCT/KR2019/011019
(87) International publication number: WO 2020/045993

(57) **Abstract**

An apparatus and a method for providing risk information by using mobile ID group information are disclosed. An apparatus for providing risk information by using mobile ID group information, according to one embodiment of the present invention, comprises one or more processors and an execution memory for storing at least one program to be executed by the one or more processors, wherein the at least one program detects a risk situation of traffic, recognizes the type of the risk situation, generates mobile ID group information including information related to the location of the risk situation, and transmits the mobile ID group information to a server device in a control center, and the server device in the control center generates risk information on the basis of the mobile ID group information, selects a terminal device to which the risk information is to be transmitted, and transmits the risk information to the terminal device.

## Description

### [Technical Field]

The present disclosure relates to traffic information communication technology, and more particularly, to traffic information communication technology for providing traffic conditions, traffic information, accident information, and risk information.

### [Background Art]

In general, methods to collect traffic information include a vehicle or smartphone navigation system that functions as a guide from the current vehicle location to a destination, a vehicle detection system (VDS), a closed-circuit television (CCTV) allowing for direct observation with the naked eye, an automatic vehicle identification system (AVI) that collects vehicle license plate information, a beacon technique for collecting IDs, and dedicated short-range communications (DSRC) for collecting traffic information using wireless communication, and wireless LAN (WLAN).

Technologies for providing traffic information and announcing dangerous situations include a navigation system, a safety application for smartphones, a variable message sign (VMS) device installed on the road to provide information to drivers on the road, and traffic broadcasting that provides traffic information through radio frequency or digital multimedia broadcasting (DMB).

There is a risk dissemination and notification technology that provides the GPS coordinates of a risky place based on the location of the risky site.

In the event of a dangerous situation such as fire, heat wave, flood, and earthquake, there is technology for disseminating and announcing a risky situation on the basis of base station per local government.

However, most navigation systems have limitations in identifying the location in a long tunnel where GPS location is not received. In addition, when the navigation is not executed, the travel path and the current location cannot be known, and a risky situation on the road ahead of the vehicle cannot be announced.

Further, the driver's terminal device cannot function to automatically detect wrong entry to one-way road or an exit road, or reverse driving that occurs when exiting an expressway or motorway along which the driver is traveling and to automatically inform the driver of the reverse driving or automatically report the reverse driving to the control center server. In addition, the device cannot function to automatically disseminate and announce the reverse driving situation only to terminal devices of drivers within a certain range among the drivers traveling on the same road in the same direction.

In addition, in the event of an accident causing unconsciousness during driving, the driver's terminal device cannot function to automatically detect the accident causing unconsciousness and to automatically transmit data about the road name, the tunnel name, the travel direction, an unconsciousness-related emergency rescue request, and the like to the control center server to automatically report the risky situation and make an emergency rescue request. There is no technology that can automatically provide risk information about of the vehicle ni the accident on the road only to the terminal devices of drivers traveling behind on the same road, in the same tunnel, or in the same travel direction. Accordingly, when an accident causing unconsciousness occurs during driving, the golden hour for emergency rescue of the unconscious driver may not be kept, and thus the driver may die. Further, the accident may cause secondary accidents to approaching drivers who are not aware of the accident, resulting in death and damage.

In addition, when the vehicle is stopped in a tunnel where GPS is not received due to breakdown or an accident, the driver's terminal device cannot automatically detect stoppage and the location where the driver has stopped and transmit the name of the road along which the driver is traveling, the travel direction, the tunnel name, or the location where the driver is stopped in the tunnel to the server at the control center. Further, there is no technology to automatically transmit in real time the risky situation related information such as the stopping situation in the tunnel and the location of stoppage only to terminal devices of drivers traveling behind in the tunnel and drivers traveling toward the tunnel within a certain range.

In addition, in the event of a risky situation on the road, such as, for example, wrong-way driving, breakdown, accident, work, fog, or ice on the road, the conventional GPS coordinate-based risky situation dissemination method and emergency disaster texting (CBS) scheme cannot announce the risky situation taking place ahead on the road only to the terminal devices of drivers in the follower vehicles which are consistent with each other regarding the driving road, such as, for example, an expressway, urban expressway, general national road, or local road, the travel direction directed to, for example, Seoul or Busan, an estimated distance to reach, and a set range. Korean Patent Application Publication No. 10-2018-0014345, titled "APPARATUS FOR PROVIDING TRAFFIC INFORMATION AND METHOD THEREOF," discloses an apparatus and method for providing traffic information based on a changing vehicle speed within a single link.

### [Disclosure]

### [Technical Problem]

It is an object of the present disclosure to automatically detect traffic information related to a risky situation such as wrong-way driving, an accident causing an unconscious state during driving, and a stoppage in a tunnel to provide risk information in real time and disseminate and automatically announce the risky situation in a customized manner.

It is another object of the present disclosure to prevent accidents by sharing traffic information related to a situation involving a risk in real time, and to reduce damage to life and property that may occur by a driver himself, by securing an emergency rescue golden hour.

### [Technical Solution]

In accordance with one aspect of the present disclosure, provided is an apparatus for providing risk information using mobile ID group information, including: one or more processors; and an execution memory configured to store at least one program executed by the one or more processors, wherein the at least one program detects a risky situation in traffic, recognizes a type of the risky situation, generates mobile ID group information including information about a location of the risky situation, and transmits the mobile ID group information to a server of a control center, wherein the server of the control center generates risk information based on the mobile ID group information, and selects a terminal device for transmission of the risk information, and transmits the risk information to the terminal device.

Here, the at least one program may detect the risky situation based on at least one of a travel direction of a vehicle, a travel speed of the vehicle, and a change in time at which a transponder ID pre-installed on a road is recognized, and determine the type of the risky situation.

Here, the at least one program may match a plurality of IDs for indicating information about the location of the risky situation corresponding to the type of the risky situation according to a preset rule and generate the mobile ID group information.

The at least one program may recognize the transponder ID from a transponder pre-installed on the road, and generate the mobile ID group information further including the transponder ID.

The server of the control center may photograph a location corresponding to at least one ID included in the mobile ID group information using a CCTV installed on the road adjacent to GPS coordinates included in the mobile ID group information, and output an image obtained by photographing the location through a display device.

Upon failing to receive GPS coordinates of a current location, the at least one program may generate the mobile ID group information by calculating the current location based on the travel direction of the vehicle and the change in time at which the transponder is recognized.

Upon failing to receive the GPS coordinates of the current location, the at least one program may check whether the vehicle enters a tunnel and generate the mobile ID group information including a tunnel ID of the tunnel.

When the server of the control center checks the tunnel ID in the mobile ID group information, the server may photograph an inside of the tunnel corresponding to the tunnel ID using a CCTV pre-installed inside the tunnel, and output an image obtained by photographing the inside of the tunnel through a display device.

Here, the at least one program may generate the mobile ID group information further including a preset cell ID in a base station area close to a location of the risky situation.

When the server of the control center checks the cell ID in the mobile ID group information, the server may set neighboring cell IDs of at least one base station area neighboring the base station area of the cell ID as a neighboring cell ID group, and generate the risk information.

Here, the server of the control center may select a terminal device located in the base station area corresponding to the neighboring cell ID group as a risk information announcement target, and transmit the risk information thereto.

In accordance with another aspect of the present disclosure, provided is a method for providing risk information by a risk information providing apparatus using mobile ID group information, the method including: detecting a risky situation in traffic and recognizing a type of the risky situation; generating mobile ID group information including information about a location of the risky situation; transmitting the mobile ID group information to a server of a control center; generating, by the server of the control center, risk information based on the mobile ID group information; and selecting a terminal device for transmission of the risk information and transmitting the risk information to the terminal device.

The recognizing of the type of the risky situation may include detecting the risky situation based on at least one of a travel direction of a vehicle, a travel speed of the vehicle, and a change in time at which a transponder ID pre-installed on a road is recognized and determining the type of the risky situation.

Here, the generating of the mobile ID group information may include matching a plurality of IDs for indicating information about the location of the risky situation corresponding to the type of the risky situation according to a preset rule and generating the mobile ID group information.

The generating of the mobile ID group information may include recognizing the transponder ID from a transponder pre-installed on the road and generating the mobile ID group information further including the transponder ID.

The generating of the risk information may include photographing, by the server of the control center, a location corresponding to at least one ID included in the mobile ID group information using a CCTV installed on the road adjacent to GPS coordinates included in the mobile ID group information; and outputting, by the server of the control center, an image obtained by photographing the location through a display device.

Here, the generating of the mobile ID group information may include when reception of GPS coordinates of a current location fails, calculating the current location based on the travel direction of the vehicle and the change in time at which the transponder is recognized and generating the mobile ID group information.

The generating of the mobile ID group information may include when the reception of the GPS coordinates of the current location fails, checking whether the vehicle enters a tunnel and generating the mobile ID group information including a tunnel ID of the tunnel.

The generating of the risk information may include when the tunnel ID is checked in the mobile ID group information, photographing, by the server of the control center, an inside of the tunnel corresponding to the tunnel ID using a CCTV pre-installed inside the tunnel; and outputting, by the server, an image obtained by photographing the inside of the tunnel through a display device.

The generating of the mobile ID group information may include generating the mobile ID group information further including a preset cell ID in a base station area close to a location of the risky situation.

Here, the generating of the risk information may include when the cell ID is checked in the mobile ID group information, setting, by the server of the control center, neighboring cell IDs of at least one base station area neighboring the base station area of the cell ID as a neighboring cell ID group and generating the risk information.

Here, the transmitting of the risk information may include selecting a terminal device located in the base station area corresponding to the neighboring cell ID group as a risk information announcement target and transmitting the risk information thereto.

The transmitting of the risk information may include selecting a subscriber terminal device pre-stored in the server of the control center as a risk information announcement target and transmitting the risk information to the subscriber terminal device.

The transmitting of the risk information may include selecting a subscriber terminal device of a related organization or a company operatively connected with the server of the control center as the risk information announcement target and transmitting the risk information to the subscriber terminal device.

### [Advantageous Effects]

According to the present disclosure, a risky situation such as wrong-way driving, an accident causing an unconscious state during driving, and a stoppage in a tunnel may be automatically detected. Thereby, risk information may be provided in real time and the risky situation may be disseminated and automatically announced in a customized manner.

In addition, according to the present disclosure, traffic information related to a situation involving a risk may be shared in real time. Thereby, accidents may be prevented and an emergency rescue golden hour may be secured. Accordingly, damage to life and property that may occur by a driver himself may be reduced.

### [Description of Drawings]

FIG. 1 is a diagram showing that a mobile ID group is set on a road according to an embodiment of the present disclosure.
FIG. 2 is a diagram showing that a mobile ID group is set in a tunnel according to an embodiment of the present disclosure.
FIG. 3 is a diagram illustrating a process of sharing a risky situation occurring in a tunnel by using mobile ID group information according to an embodiment of the present disclosure.
FIG. 4 is a diagram illustrating a process of sharing a risky situation occurring at an intersection by using mobile ID group information according to an embodiment of the present disclosure.
FIG. 5 is a view showing a risk situation occurring at the intersection shown in FIG. 4 and confirming the risk situation through CCTV in the control center.
FIG. 6 is a diagram illustrating a process of sharing a risky situation occurring on a road by using mobile ID group information including a cell ID indicating a base station area according to an embodiment of the present disclosure.
FIG. 7 is a flowchart illustrating a method for providing traffic information using mobile ID group information according to an embodiment of the present disclosure.
FIG. 8 is a detailed flowchart illustrating an example of the step of recognizing occurrence of a risky situation shown in FIG. 7.
FIG. 9 is a detailed flowchart illustrating an example of the step of generating risk information shown in FIG. 7.
FIG. 10 is a block diagram showing a risk information providing apparatus according to an embodiment of the present disclosure.
FIG. 11 is a diagram showing a computer system according to an embodiment of the present disclosure.

### [Best Mode]

The present disclosure will be described in detail below with reference to the accompanying drawings. Redundant description and detailed descriptions of well-known functions and elements that may unnecessarily obscure the subject matter of the present disclosure are omitted. Embodiments of the present disclosure are intended to provide thorough understanding of the present disclosure to those having ordinary skill in the art. Therefore, it will be appreciated that for simplicity and clarity of illustration, the dimensions or shapes of some of the elements may be exaggerated.

Throughout this specification, when a part is described as "including" a component, the part may further include other components, rather than precluding the other components unless explicitly stated otherwise.

Hereinafter, preferred embodiments of the present disclosure will be described in detail with reference to the accompanying drawings.

A risk information providing system using mobile ID group information according to an embodiment of the present disclosure includes a risk information providing terminal device 100, a server 200 of a control center, and a risk information announcing terminal device 300.

Here, the risk information providing apparatus using the mobile ID group information according to the embodiment of the present disclosure may correspond to the risk information providing terminal device 100 and the risk information announcing terminal device 300, and perform the functions of the risk information providing terminal device 100 and the risk information announcing terminal device 300.

The risk information providing terminal device 100 may automatically detect risky situations such as wrong-way driving, an accident causing an unconscious state during driving, and an abnormal stoppage and transmit the corresponding mobile ID group information to the server 200 of the control center, even when navigation is not executed or the vehicle is in a tunnel where GPS reception is not allowed.

The server 200 of the control center may receive and check the mobile ID group information, generate risk information, and share and disseminate the risk information to the risk information announcing terminal device 300, which is a terminal device of vehicles in the corresponding area. Here, the control center may correspond to the traffic control center, which is an organization that comprehensively checks the traffic conditions of vehicles and roads, and control traffic to make the traffic flow smoothly.

For example, the traffic control center may be provided with a road traffic control system installed to comprehensively check the traffic situation in a city and control the traffic flow, thereby controlling each road and intersection. It may also collect various kinds of traffic information from CCTV cameras for vehicle detection installed at each intersection and traffic patrol vehicles and automatically transmit the same to the computer (server) of the central control center.

In addition, the server 200 of the control center may quickly analyze the collected information to automatically adjust and control traffic lights at intersections within the traffic control area. In addition, it may transfer the details of the control to a traffic condition display board (display device) of the control center, thereby quickly disseminating the details to the vehicle drivers through traffic information broadcasting. Upon receiving the risk information, the risk information announcing terminal device 300 may check the mobile ID group information, and automatically announce a risky situation only when the mobile ID group matches the name of the driving road, the travel direction, and the set estimated distance to reach.

The risk information providing terminal device 100 and the risk information announcing terminal device 300 may calculate a travel speed according to a mobile ID group recognition time or a travel speed according to a cell ID change time. Then, upon sensing that the calculated speed exceeds a specific speed, an application program, such as an application, may be automatically activated to automatically detect a risky situation such as wrong-way driving, an accident causing an unconscious state, or a stoppage in a tunnel even without the destination and the travel path to the destination provided through the screen and by voice. When the detected event is determined to be a risky situation, the mobile ID group information may be automatically transmitted to the control center server 200.

The risk information providing terminal device 100 and the risk information announcing terminal device 300 may calculate a travel speed according to a mobile ID group recognition time or a travel speed according to a cell ID change time. Then, upon sensing that the calculated speed exceeds a specific speed, a DSRC controller may be automatically activated to automatically recognize and store the mobile ID and point of a transponder terminal configured to detect an entry, an exit, a toll gate, a tunnel, icing, fog, landslide, flood, or the like, and then announce or disseminate the same. At this time, the risk information providing terminal device 100 and the risk information announcing terminal device 300 may calculate a travel speed according to a mobile ID group recognition time or a travel speed according to a cell ID change time. Then, upon sensing that the calculated speed exceeds a specific speed, an application may be automatically executed, and ask the user of the terminal device whether the user agrees to provision of risk information and guidance through the screen or by voice, such that the user may select Agree or Reject.

The risk information providing terminal device 100 may be installed in a vehicle equipped with functions of, for example, a gyro sensor, NFC, Bluetooth, video capture, drowsiness prevention, and lane departure prevention.

In this case, when the risk information providing terminal device 100 recognizes a transponder terminal that is already recognized and automatically linked, such as an OBD terminal, a charger for a cigar jack, a vehicle owner contact information announcing terminal, a black box, or a lane departure prevention device, it may automatically activate the application program and automatically recognize the mobile ID group. When the inclination of the transponder terminal mounted on the vehicle or the like is confirmed to be greater than a set value or an accident is determined, the corresponding mobile ID group information including transponder data may be automatically transmitted to the server 200 of the control center.

The risk information providing terminal device 100 and the risk information announcing terminal device 300 may be set not to automatically activate the application program to announce risk information even in the case where the mobile ID group information received from the server 200 of the control center matches, when a personal transponder terminal installed and stored in a vehicle, which is a mobile object, for example, an NFC, Bluetooth, or OBD terminal, a charger for cigar jack, a vehicle owner contact information announcing terminal, a black box, or a lane departure prevention device is not recognized, or when a public wireless terminal installed in a bus, a subway car, or a taxi, or a node ID of a bus platform or subway entrance is recognized, or when the user moves at a certain speed or higher using, for example, public transportation after payment for a ride on the bus, subway, or taxi.

When the risk information providing terminal device 100 and the risk information announcing terminal device 300 are moving at a preset speed or lower for a preset time, for example, when moving at 30 km or a lower speed for 5 minutes or more, they may be set not to announce risk information even if the mobile ID group information received from the server 200 of the control center matches.

When the application is manually executed and automatically detects or recognizes a risky situation such as wrong-way driving, an accident causing an unconscious state, or a stoppage in a tunnel even without the destination, the travel path to the destination, the current location, and the like being announced through the screen and by voice, the risk information providing terminal device 100 automatically transmits the corresponding mobile ID group information to the server 200 of the control center.

Upon receiving the mobile ID group including GPS coordinates from the risk information providing terminal device 100, the control center server 200 may automatically connect to a monitor linked with a neighboring CCTVwith respect to the risk information providing terminal device 100, perform automatic recording and presentation, check the presented risk information, and then disseminate the related mobile ID group.

In providing the risk information, the risk information providing terminal device 100 may transmit a mobile ID group including a cell ID among the corresponding mobile ID groups. Upon receiving the mobile ID group including the cell ID, the control center server 200 may designate a risk information providing cell ID, a first stage neighboring cell ID group including the risk information providing cell ID, and a second stage neighboring cell ID group including the risk information providing cell ID based on the cell ID of the risk information providing terminal device 100 according to the risk type, and disseminate the mobile ID groups.

Even if the risk information announcing terminal device 300 does not execute an application such as a navigation system, it may detect movement above a certain speed by calculating the travel speed according to the mobile ID group recognition time or the travel speed according to the cell ID change time. Then, the application program may be automatically activated, automatically recognize, store, and update the ID group, and receive the risk information transmitted from the server 200 of the control center without the destination, the travel path to the destination, the current location, and the like being announced through the screen and by voice. Thereafter, it may match the mobile ID group. When the road name, the tunnel name, the travel direction, the set range, or the like matches, the risk type, risk location, an estimated distance to reach, a range, a countermeasure, and the like may be announced by voice and through the screen.

The risk information announcing terminal device 300 may match the received risk information with a pre-stored mobile ID group without providing a trajectory and a current location to the server 200 of the control center, and may announce risk information by voice and through the screen without providing personal information only when the mobile ID group does not match.

When the risk information providing terminal device 100 and the risk information guidance terminal device 300 recognize change in order of increased or decreased recognition values of a mobile node point and a link point, or recognize a mobile node point and a link point set as an exit ID before recognizing the exit ID after automatically recognizing the entry ID, the devices may determine that the driving is wrong-way driving, and automatically execute an application for announcing the wrong-way driving situation to announce the situation by voice and through the screen. The application may automatically transmit the corresponding mobile ID group, for example, wrong-way driving, the driving road name, the wrong-way driving direction, the wrong-way driving location, and the like to the control center server 200.

The risk information providing terminal device 100 and the risk information announcing terminal device 300 may determine the moving speed of the terminal device based on the mobile ID group recognition time on a highway, an automobile dedicated road, a national highway, or the like, not in set areas such as a rest area and a rest stop. Then, when there is no movement for a certain period of time in the zero state after the terminal device is rapidly decelerated, the devices may determine the moving speed for a certain period of time immediately before the time when the moving speed is zero, and determine that the situation is an accident when the speed is abnormally zero. Then, the application may be automatically executed and automatically announce the abnormal stoppage situation by voice and through the screen. When there is no responsive action, such as cancellation, the corresponding mobile ID group, such as an unconsciousness involved emergency rescue request, the name of the driving road, the travel direction, the current location, and the like may be automatically transmitted to the server 200 of the control center.

In a tunnel or the like where the GPS signal is not received, the risk information providing terminal device 100 and the risk information announcing terminal device 300 may determine the moving time of the terminal device based on the recognition time of transponder points installed at regular intervals.

Based on this transponder recognition time, when the movement is performed at a specific speed or lower or stoppage or wrong-way driving occurs, an application may be automatically executed to announce the movement at the specific speed or lower, abnormal stoppage or wrong-way driving by voice and through the screen and automatically transmit the wrong-way driving or stoppage location in the tunnel to the control center server 200 based on the mobile ID group, for example, a risky situation such as wrong-way driving or stopping in the tunnel, the name of the driving road, the name of the tunnel, the travel direction, the last recognized transponder location, etc.

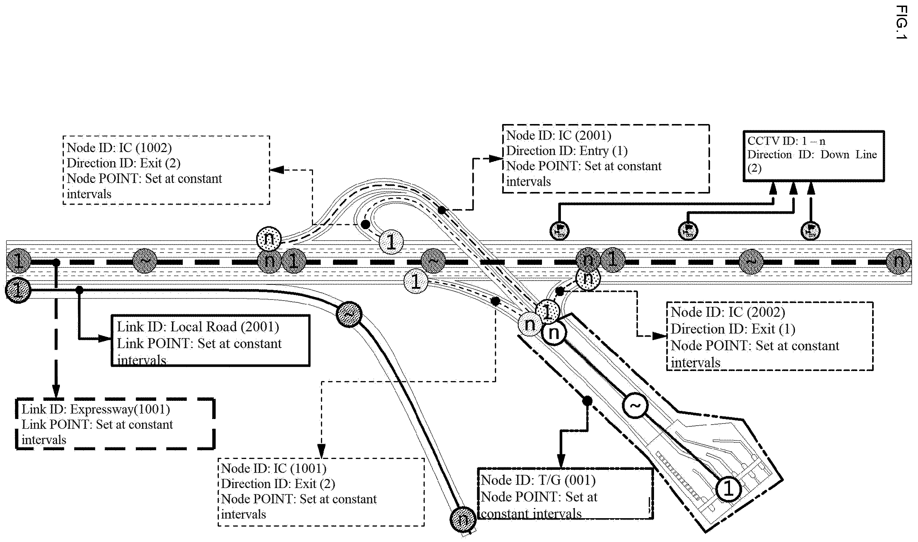

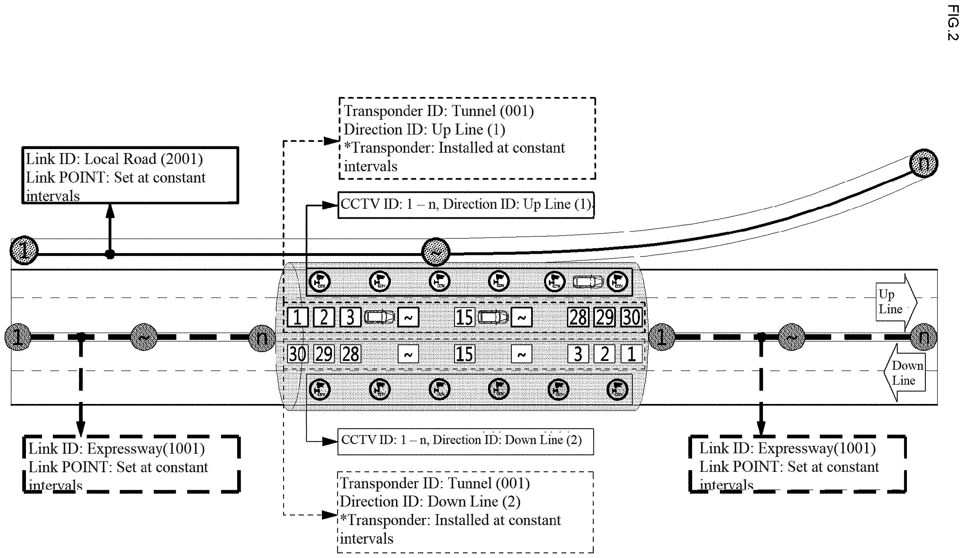

FIG. 1 is a diagram showing that a mobile ID group is set on a road according to an embodiment of the present disclosure. FIG. 2 is a diagram showing that a mobile ID group is set in a tunnel according to an embodiment of the present disclosure.

Table 1 shows a mobile ID group according to an embodiment of the present disclosure.

In this case, the number of digits in Table 1 may correspond to the number of bits or the number of digits of a decimal number, and the size of the number of digits may be freely set by the user.

**TABLE 1**

| **Mobile ID group** | | | |
|---|---|---|---|
| ID name | Classification | Contents and Examples | No. of digits |
| Risk type ID | Risk type | Wrong-way driving / Accident causing unconscious state during driving / Failure / Accident / Abnormal stoppage / Fire / Wildfire / Flood, etc. | 4 |
| Country ID | Country | Republic of Korea / France / Switzerland / Germany Austria, etc. | 3 |
| Administration ID | Administrative area | Jongno, Seoul / Haeun, Busan / Suwon, Gyeonggi / Cheonan, Chungbuk, etc. | 5 |
| Road ID | Road type | Expressway / Urban Expressway / Metropolitan Road / General National Road / Local Road, etc. | 2 |
| Road name ID | Road name | Gyeongbu Expressway / Jungang Expressway / Gangbyeonbuk-ro / Honam-ro / Gyeongsang-daeroDonghae-daero / 3rd Ring Road, etc. | 4 |
| Node ID | Movement reference by road name | Entry / Exit / T/G (toll gate) / IC (three-dimensional intersection) JC (road junction) tunnel / Bridge / Subway entrance / Bus platform, etc. | 4 |
| Node POINT | Location for each node ID | Points 1 to n are assigned from the start point to the end point for each ID | 4 |
| Link ID | Movement section by road name | Link ID is assigned to sections 1 to n for each road | 3 |
| Link POINT | Location for each link ID | Points 1 to n are assigned to points from the start point to the end point for each section | 4 |
| Direction ID | Direction of movement | Travel direction according to the increase or decrease of the recognition value, such as an up line/down line for each node point and link point | 1 |
| Transponder ID | DSRC terminal | ID assigned to transponders installed at regular intervals in areas where GPS signals cannot be received, such as tunnels | 2 |
| Cell ID | Mobile communication base station installation-location | The ID is assigned to each base station location and then matched with GPS coordinates for each area | 3 |
| Connection ID | GPS coordinate based connection nodes and links | The mobile device stores and predicts the ID and POINT of the node and link preceding the immediately preceding node and link, the immediately preceding | |
| | | node and link, the current node and link, the next node and link, and the node and link after the next node and link. | |
| GPS coordinates | Current location | GPS coordinates of the current location of the mobile device | |

Referring to FIG. 1 and Table 1, the road type may be set according to the ID names and classification of mobile ID groups shown in Table 1, and the node ID and link ID may be set according to the movement reference for each road name, the location of each node ID, and the node point that distinguishes the location for each node ID may be set. Also, the link POINT that distinguishes the location of each link ID may be set, and a direction ID is set to distinguish the travel direction.

Here, the direction ID may indicate entry to or exit from the corresponding area according to the travel direction of the vehicle, and a CCTV ID may be set in the CCTV installed on the road.

Referring to FIG. 2, it may be seen that CCTV IDs are sequentially set in CCTVs installed inside the tunnel according to the travel direction ID (up line, down line).

Since GPS cannot be received inside the tunnel, transponders may be installed at regular intervals, and transponder IDs may be set in the transponders according to the travel direction ID (up line, down line).

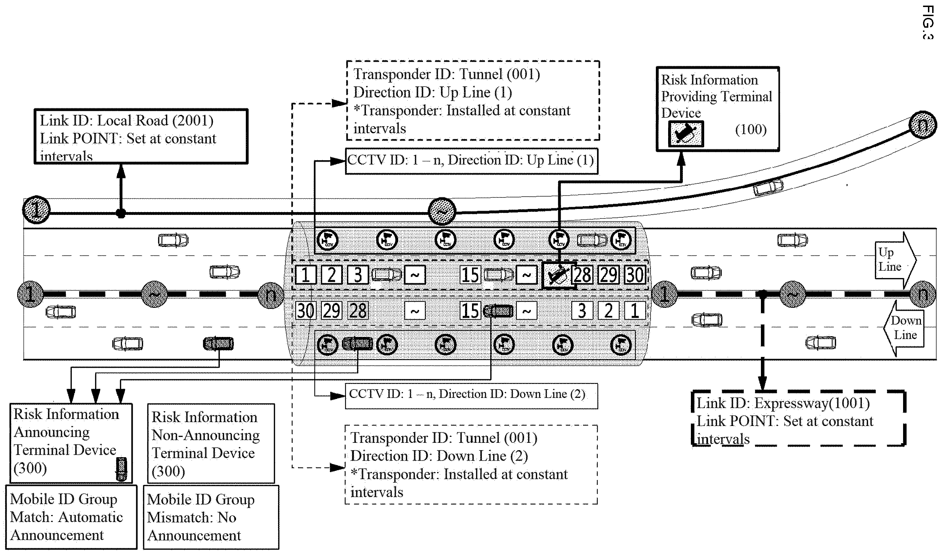

FIG. 3 is a diagram illustrating a process of sharing a risky situation occurring in a tunnel by using mobile ID group information according to an embodiment of the present disclosure.

Referring to FIG. 3, the risk information providing terminal device 100 according to the embodiment of the present disclosure may automatically recognize the transponder ID installed at regular intervals in the tunnel where GPS cannot be received, and calculate the direction and travel time based on the recognition time.

When the risk information providing terminal device 100 according to the embodiment of the present disclosure may determine a risky situation such as wrong-way driving, slow driving, or stopping in a tunnel, and may transmit the corresponding mobile ID group information including the transponder ID to the control center server 200 when the risky situation occurs.

In this case, the server 200 of the control center may generate risk information based on the mobile ID group information and transmit the risk information to the risk information announcing terminal device 300.

Then, the risk information announcing terminal device 300 may receive the risk information, compare the same with the previously stored mobile ID group, and automatically announce the risk information only when the received data matches the stored data.

Table 2 shows the result of calculating the travel speed by the risk information providing terminal device 100 according to the embodiment of the present disclosure based on the change in time for recognition of the transponders obtained by recognizing the transponders installed at preset intervals through broadcasting at preset time intervals while moving.

**TABLE 2**

| Travel speed / speed per hour | 150km | 120km | 100km | 80km | 60km | 50km | 40km | 30km |
|---|---|---|---|---|---|---|---|---|
| Distance traveled per second / in meters | 41.67 | 33.33 | 27.78 | 22.22 | 16.67 | 13.89 | 11.1 | 8.33 |
| Transponder recognition time / sec when installed at intervals of 100m | 2.4 | 3 | 3.6 | 4.5 | 6 | 7.2 | 9 | 12 |

For example, referring to Table 2, when the risk information providing terminal device 100 and the risk information announcing terminal device 300 move at 50 km/h past transponders installed at intervals of 100 m, the recognition time between transponders may be 7.2 seconds. When the devices move at 80 km/h, the recognition time between transponders may be 4.5 seconds. When the devices move at 120 km/h, the recognition time between transponders may be 3 seconds.

In the case of wrong-way driving, slowing driving, or stopping based on the transponder recognition direction and recognition time, the risk information providing terminal device 100 and the risk information announcing terminal device 300 may automatically execute the corresponding application to announce the situation by voice and through the screen, and automatically transmit the stoppage location in the tunnel to the server 200 of the control center based on the corresponding mobile ID group, for example, a wrong-way driving/slow driving/stopping situation in the tunnel, the name of the driving road, the name of the tunnel, the travel direction, and the last recognized transponder location.

In addition, when the risk information providing terminal device 100 according to the embodiment of the present disclosure fails to recognize the next ID of the transponder for a preset time in the tunnel, it may automatically transmit corresponding mobile ID group information, such as the stoppage in the tunnel, the name of the driving road, and the travel direction, the tunnel name, and the stop location in the tunnel to the server 200 of the control center.

Then, the server 200 of the control center may be operatively connected to a CCTV inside the tunnel from the CCTV ID based on the mobile ID group information, and check a risk situation automatically presented on the CCTV monitor of the CCTV, and transmit, to the risk information announcing terminal device 300, risk information generated based on the mobile ID group information.

Then, the risk information announcing terminal device 300 may receive the risk information including a transponder ID and match the currently recognized transponder ID or the like with risk information. When the matching result is coincident, the device may announce the risk type, an estimated distance to a vehicle stopped in the tunnel, a countermeasure, and the like by voice and through the screen based on the risk information.

When the mobile ID group of the risk information does not match, the risk information announcing terminal device 300 may not announce the risk information to the driver.

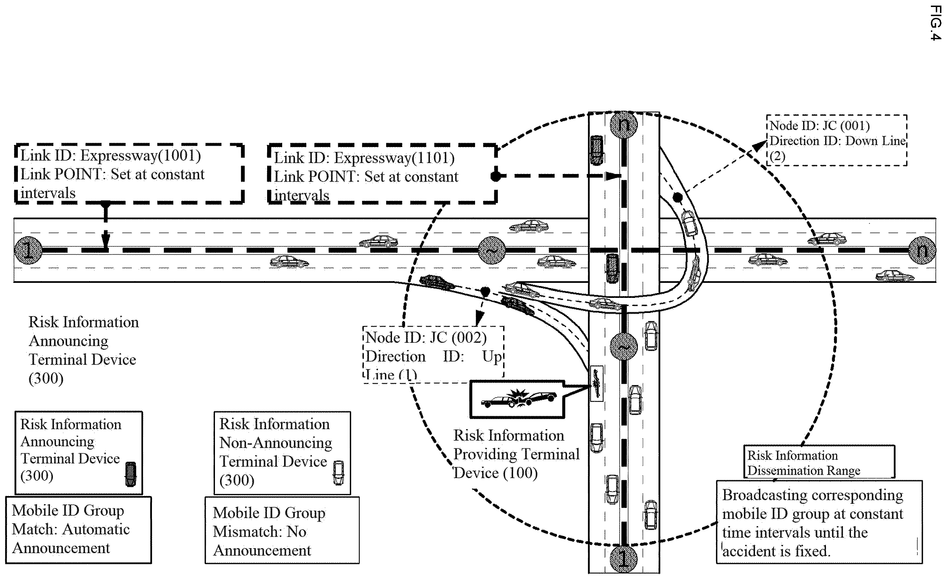

FIG. 4 is a diagram illustrating a process of sharing a risky situation occurring at an intersection by using mobile ID group information according to an embodiment of the present disclosure.

Referring to FIG. 4, when a vehicle entering a road with a changed link ID through a JC (stereoscopic junction) is stopped due to an accident, or the like, the risk information providing terminal device 100 of the vehicle may transmit mobile ID group information including a previous link ID, a previous JC ID, a current link ID & POINT, and a direction ID to the server 200 of the control center.

The server 200 of the control center may generate risk information including a risk factor for stopping at the intersection based on the mobile ID group information, and transmit the risk information to the risk information announcing terminal device 300.

The risk information announcing terminal device 300 may receive the risk information. When the received information matches a previously stored mobile ID group in terms of ID, the device may announce the risk type, the location of the risk, the estimated distance to reach, and a countermeasure. When the information does not match the ID, the device may not announce the risk information.

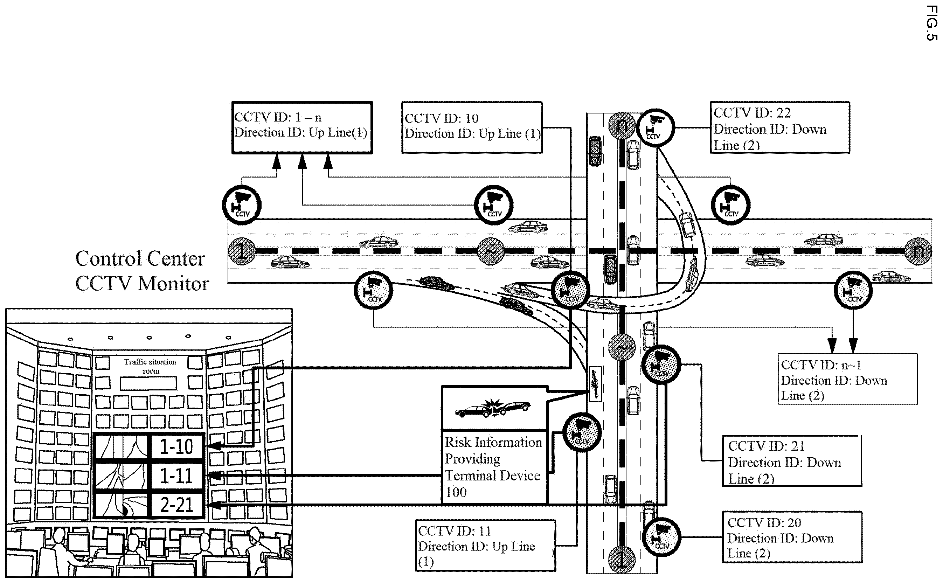

FIG. 5 is a view showing a risk situation occurring at the intersection shown in FIG. 4 and confirming the risk situation through CCTV in the control center.

Referring to FIG. 5, the server 200 of the control center may receive mobile ID group information and automatically connect to a CCTV monitor corresponding to a risky situation, and record and display the situation.

The server 200 of the control center may automatically connect, record and display neighboring CCTVs 1-10, 1-11, and 2-21 among numerous CCTV monitors with reference to GPS coordinates, cell ID or mobile ID & POINT, link ID & POINT, etc., transmitted together based on the mobile ID group information transmitted by the risk information providing terminal device 100 to enable efficient monitoring by personnel in the situation room. The personnel in the situation room may determine the displayed risk information and disseminate mobile ID group information corresponding to each risk type and level to the risk information announcing terminal device 300 as risk information.

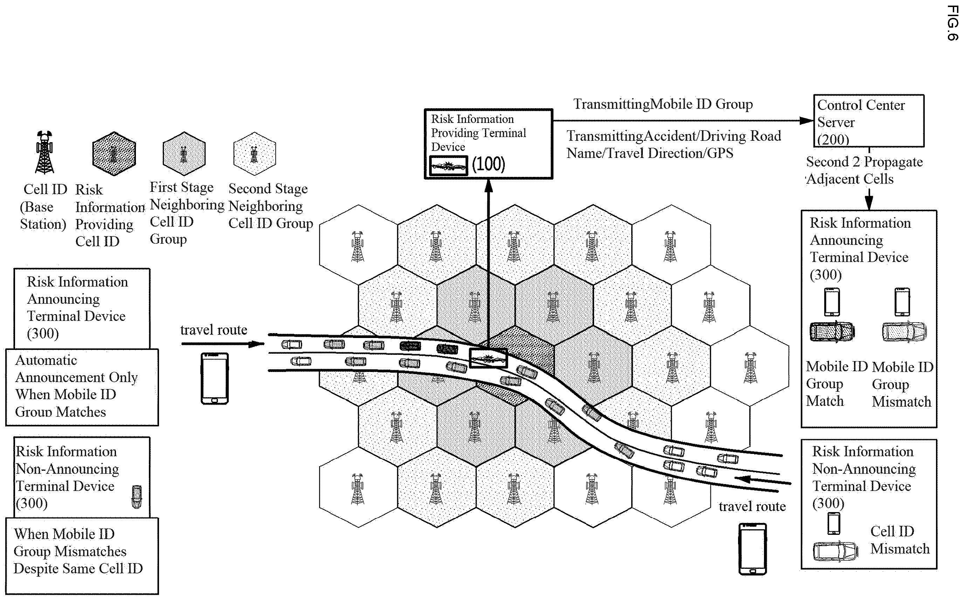

FIG. 6 is a diagram illustrating a process of sharing a risky situation occurring on a road by using mobile ID group information including a cell ID indicating a base station area according to an embodiment of the present disclosure.

Referring to FIG. 6, when the risk information providing terminal device 100 transmits mobile ID group information including a cell ID in providing risk information, the server 200 of the control center receiving the mobile ID group including the cell ID may designate a risk information involving cell ID, a first stage neighboring cell ID group including the risk information involving cell ID, and a second stage neighboring cell ID group including the risk information involving cell ID based on the cell ID of the risk information providing terminal device 100 according to the risk type.

Then, the server 200 of the control center may transmit the risk information including a cell ID and a neighboring cell ID group to the risk information announcing terminal device 300.

At this time, the server 200 of the control center may transmit the risk information only to the risk information announcing terminal device 300 connected to the cell ID and neighboring cell ID from the risk information.

Then, the risk information announcing terminal device 300 may receive the risk information, match the same with the mobile ID group, and announce the risk type, the location of the risk, the estimated distance to reach, and A countermeasure only when the information matches the mobile ID group.

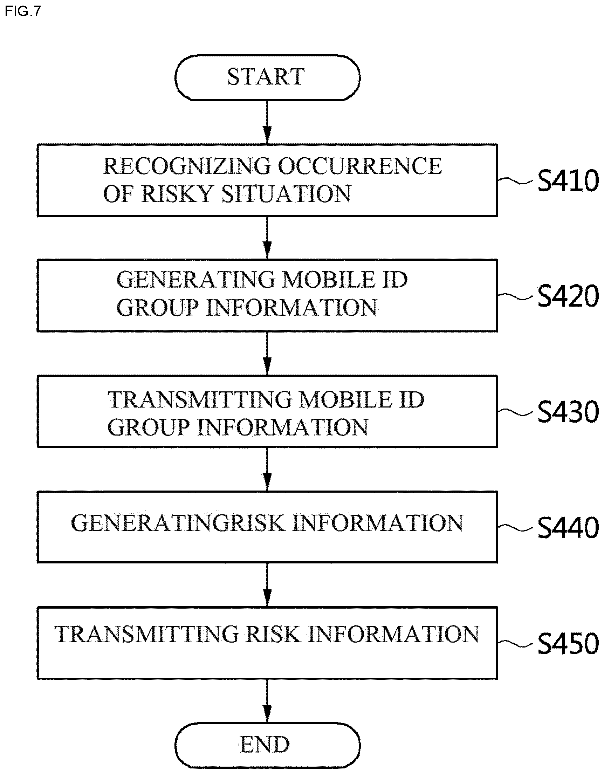

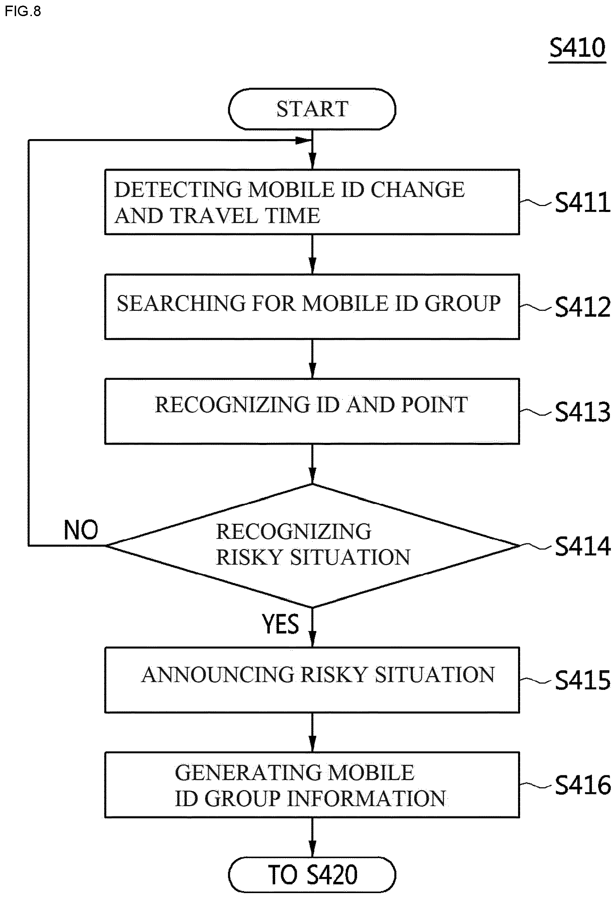

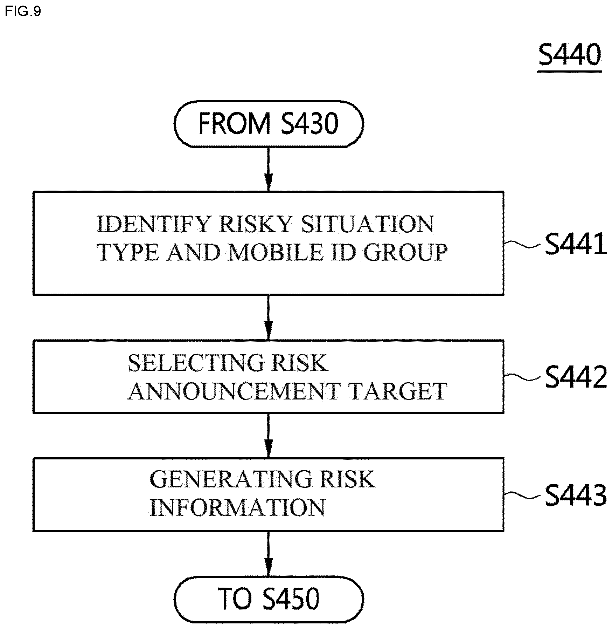

FIG. 7 is a flowchart illustrating a method for providing traffic information using mobile ID group information according to an embodiment of the present disclosure. FIG. 8 is a detailed flowchart illustrating an example of the step of recognizing occurrence of a risky situation shown in FIG. 7. FIG. 9 is a detailed flowchart illustrating an example of the step of generating risk information shown in FIG. 7.

A method for providing risk information using mobile ID group information according to an embodiment of the present disclosure may include detecting a risky situation in traffic and recognizing the type of the risky situation (S410).

Then, in step S410, the risky situation may be detected based on at least one of a travel direction of a vehicle, a travel speed of the vehicle, and a change in time of recognizing the transponder ID installed on the road, and determine the type of risky situation.

Referring to FIG. 8, in step S410, a mobile ID change may be first detected and a travel time may be calculated (S411).

In addition, in step S410, a mobile ID group may be searched (S412).

That is, in step S412, when the mobile ID changes due to movement at a predetermined speed or higher, the mobile ID group may be recognized and searched.

Further, in step S410, the ID and POINT may be recognized (S413).

That is, in step S413, an entry/exit ID or an entry ID, a node ID and a POINT may be recognized according to the change in mobile ID, and the change in the increase/decrease value of the node POINT and the link POINT may be calculated to detect a risky situation such as wrong-way driving (S414).

In addition, in step S410, when the risky situation is recognized, a wrong-way driving announcing application may be automatically executed to announce wrong-way driving to the driver (S415).

In addition, in step S410, the terminal device of the wrong-way driving vehicle may generate mobile ID group information related to wrong-way driving and transmit the mobile ID group information to the server 200 of the control center.

For example, in step S410, after recognizing the occurrence of the risky situation and automatically detecting wrong-way driving, the situation may be announced to the driver and be automatically report to the control center.

First, in step S410, the mobile operation may be started, and the travel time may be calculated after detecting a mobile ID change.

Then, in step S410, when the travel speed is higher than or equal to a certain speed, the mobile ID group may be searched.

Then, in step S410, the entry and exit IDs may be recognized in the mobile ID group.

Then, in step S410, when the exit ID is recognized, the wrong-way driving announcing application may be automatically executed to announce the wrong-way driving to the driver and transmit a mobile ID group related to the wrong-way driving situation to the server 200 of the control center.

Then, in step S410, the server 200 of the control center may disseminate the reported wrong-way driving related mobile ID group as risk information.

Then, in step S410, the entry ID, node ID, and POINT may be recognized.

In step S410, a change in the node POINT increase or decrease value may be calculated.

In step S410, upon recognizing the wrong-way driving, the wrong-way driving announcing application may be automatically executed to announce the wrong-way driving to the driver and transmit a mobile ID group related to the wrong-way driving to the server 200 of the control center. Then, in step S410, the server 200 of the control center may disseminate the reported mobile ID group related to the wrong-way driving as risk information.

In step S410, the link ID and POINT may be recognized during steady driving.

In step S410, a change in a link point increase/decrease value may be calculated.

In step S410, upon recognizing the wrong-way driving, the wrong-way driving announcing application may be automatically executed to announce the wrong-way driving to the driver and transmit a mobile ID group related to the wrong-way driving to the server 200 of the control center. Then, in step S410, the server 200 of the control center may disseminate the reported mobile ID group related to the wrong-way driving as risk information.

In step S410, when an exit ID is recognized, the operation may be repeated from step S410.

The method for providing risk information using mobile ID group information according to the embodiment of the present disclosure may include generating mobile ID group information including information on the location of the risky situation (S420).

In step S420, the mobile ID group information may be generated by matching a plurality of IDs for indicating information on the location of the risky situation corresponding to the type of the risky situation according to a preset rule.

In step S420, a transponder ID may be recognized from a transponder pre-installed on the road, and the mobile ID group information further including the transponder ID may be generated.

Then, in step S420, when reception of the GPS coordinates of the current location fails, the mobile ID group information may be generated by calculating the current location based on a travel direction of the vehicle and a change in time at which the transponder is recognized.

In step S420, when reception of the GPS coordinates of the current location fails, the mobile ID group information including a tunnel ID of a tunnel may be generated by checking whether the vehicle enters the tunnel.

In step S420, mobile ID group information further including a cell ID preset in a base station area close to a location where the risky situation occurs may be generated.

The method for providing risk information using mobile ID group information according to the embodiment of the present disclosure may include transmitting the mobile ID group information to the server 200 of the control center (S430).

The method for providing risk information using mobile ID group information according to the embodiment of the present disclosure may include generating risk information by the server 200 of the control center based on the mobile ID group information (S440)

In step S440, the server of the control centermay photograph a location corresponding to the at least one ID included in the mobile ID group information using a CCTV installed on the road adjacent to the GPS coordinates included in the mobile ID group information, and output an image obtained by photographing the location through a display device.

In step S440, when the server of the control center checks the tunnel ID in the mobile ID group information, the server may photograph the inside of the tunnel corresponding to the tunnel ID using a CCTV pre-installed inside the tunnel, and output an image obtained by photographing the inside of the tunnel through the display device.

In step S440, when the server of the control center checks a cell ID in the mobile ID group information, the server may set at least one base station area neighboring cell ID neighboring the base station area as a neighboring cell ID group, and generate the risk information.

Referring to FIG. 9, in step S440, the type of the risky situation and a mobile ID group may be first checked in the mobile ID group information (S441).

In addition, in step S440, a risk announcement target may be selected (S442).

That is, in step S442, the server 200 of the control center may not provide the risk information to all terminal devices that are provided with the risk information provision service, but may select a target to which risk information is to be provided, based on the type of the risky situation included in the risk information and the risky situation checked in the mobile ID group.

For example, when the risky situation is wrong-way driving, the server may provide the risk information only to the terminal devices of vehicles located on the road in the travel direction in which the wrong-way driving occurs. When the risky situation is fire, the server may select risk information announcement targets so as to provide risk information to the terminal devices of all vehicles on the corresponding road.

In addition, in step S440, risk information may be generated (S443).

That is, in step S443, the risk information may be generated based on the type of the risky situation, the mobile ID group, and the result of selection of the risk announcement target.

The method for providing risk information using mobile ID group information according to the embodiment of the present disclosure may also include selecting a risk information announcing terminal device 300 of a vehicle to which the risk information is to be transmitted, and transmitting the risk information to the risk information announcing terminal device 300 of the vehicle (S450). In step S450, the risk information announcing terminal devices 300 of vehicles located in a base station area corresponding to the neighboring cell ID group may be selected as risk information announcement targets, and the risk information may be transmitted thereto.

Then, in step S450, when the risk information announcing terminal device 300 receives the risk information, it matches the mobile ID group included in the risk information with the previously stored mobile ID group to announce the risk information upon determining that the group corresponds to a risk information announcement target.

In step S450, when the risk information announcing terminal device 300 receives the risk information, and the mobile ID group included in the risk information does not match the previously stored mobile ID group or does not correspond to a risk information announce target, the device may skip risk information announcement.

In step S450, a subscriber terminal device pre-stored in the server 200 of the control center may be selected as a risk information announcement target, and the risk information may be transmitted to the subscriber terminal device.

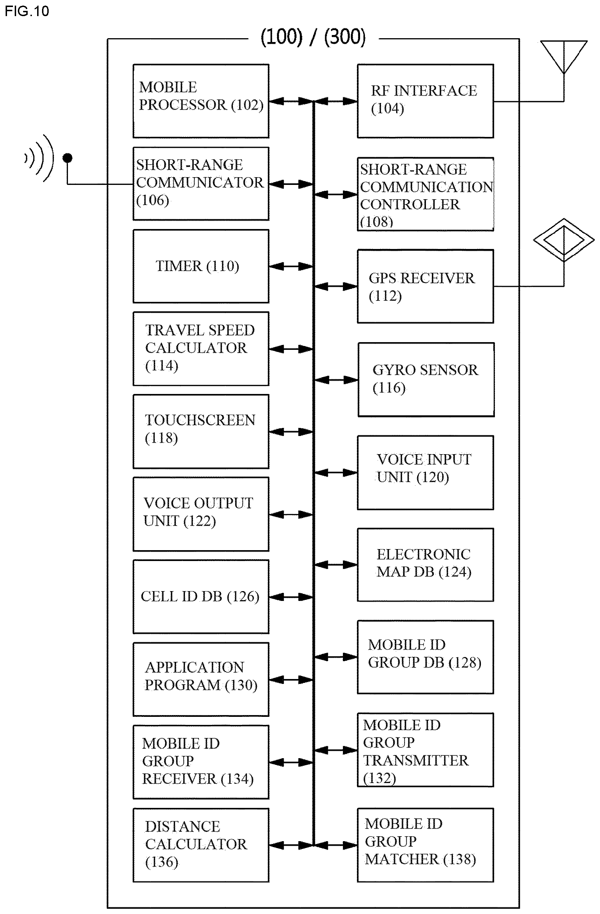

In step S450, a subscriber terminal device of a related organization or company operatively connected with the server 200 of the control center may be selected as the risk information announcement target, and the risk information may be transmitted to the subscriber terminal device. FIG. 10 is a block diagram showing a risk information providing apparatus (a risk information providing terminal device and a risk information announcing terminal device) according to an embodiment of the present disclosure.

Referring to FIG. 10, the risk information providing terminal device 100 and the risk information announcing terminal device 300 according to the embodiment of the present disclosure may include a mobile processor 102 configured to perform overall control of the terminal devices, an RF interface 104 for accessing a communication network, a short-range communicator 106 configured to perform communication through a wireless channel such as near field communication (NFC), Bluetooth, or Wi-Fi, a short-range communication controller 108, a timer 110 configured to set and read a time interval, a GPS receiver 112 configured to calculate GPS coordinates of a current location, a travel speed calculator 114 configured to calculate a travel speed according to a node ID & node POINT of a mobile ID group, detection of change in the link ID & POINT, and a transponder ID recognition time, a gyro sensor 116 configured to calculate inclination, a touchscreen 118 configured to allow input such as start, end, cancel, report, etc. to an application program and display thereof, a voice input unit 120, and a voice output unit 122, an electronic map DB 124 containing administrative area and road network information, a cell ID DB 126 configured to set a risk dissemination range for each risk type based on a location providing risk information and disseminate and announce risk information by grouping only base stations around the risky area, a mobile ID group DB 128 configured to recognize and match a risk type, node ID & POINT, link ID & POINT, travel direction ID, connection node ID, and the like, an application program unit 130 configured to execute a corresponding program and application, a mobile ID group transmitter 132 configured to transmit a corresponding mobile ID group to the control center when a risky situation is detected, a mobile ID group receiver 134 configured to receive risk information, which is mobile ID group information for each risky situation disseminated from the server of the control center, a distance calculator 136 configured to calculate a distance between the risk occurrence location received from the server of the control center and the current location, and a mobile ID group matcher 138.

According to the embodiment of the present disclosure, the server 200 of the control center may include a wired communication network connector 202, a mobile communication network connector 204, a server controller 206, an electronic map DB 208, and a cell ID DB 210, a CCTV ID DB 212, a CCTV ID associated monitor 214 corresponding to a display device, a subscriber and related organization DB (216), a mobile ID group DB 218, a risk information receiver 220, a risk information determination and setting unit 222, and a risk information dissemination and sharing unit 224.

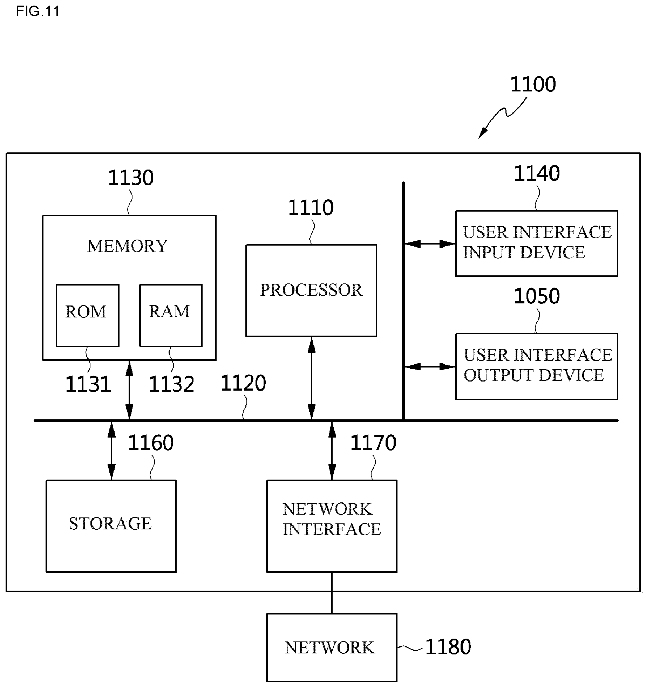

FIG. 11 is a diagram showing a computer system according to an embodiment of the present disclosure.

Referring to FIG. 11, the risk information providing terminal device 100, the server 200 of the control center, and the risk information announcing terminal device 300 according to the embodiment of the present disclosure may be implemented in a computer system 1100 such as a computer-readable recording medium. As shown in FIG. 11, the computer system 1100 may include one or more processors 1110, a memory 1130, a user interface input device 1140, a user interface output device 1150, and a storage 1160, which communicate with each other through a bus 1120. The computer system 1100 may further include a network interface 1170 connected to a network 1180. The processor 1110 may be a central processing unit or a semiconductor device configured to execute processing instructions stored in the memory 1130 or the storage 1160. The memory 1130 and the storage 1160 may be various types of volatile or nonvolatile storage media. For example, the memory may include a ROM 1131 or a RAM 1132.

That is, the risk information providing terminal device 100 according to the embodiment of the present disclosure may include one or more processors 1110 and an execution memory 1130 configured to store at least one program executed by the one or more processors 1110. The at least one program may detect a risky situation in traffic, recognize the type of the risky situation, generate mobile ID group information including information about the location of the risky situation, and transmit the mobile ID group information to the server 200 of the control center. The server 200 of the control center may generate risk information based on the mobile ID group information, and select the risk information announcing terminal device 300 of a vehicle to which the risk information is to be transmitted, and transmit the risk information to the risk information announcing terminal device 300 of the vehicle.

Here, the at least one program may detect the risky situation based on at least one of a travel direction of a vehicle, a travel speed of the vehicle, and a change in time at which a transponder ID installed on the road is recognized, and determine the type of the risky situation.

Then, the at least one program may generate the mobile ID group information by matching a plurality of IDs for indicating information on the location of the risky situation corresponding to the type of the risky situation according to a preset rule.

In this case, the at least one program may recognize a transponder ID from a transponder pre-installed on the road, and may generate the mobile ID group information further including the transponder ID.

The server 200 of the control center may photograph a location corresponding to the at least one ID included in the mobile ID group information using a CCTV installed on the road adjacent to the GPS coordinates included in the mobile ID group information, and output an image obtained by photographing the location through a display device.

When the at least one program fails to receive GPS coordinates of the current location, it may generate the mobile ID group information by calculating the current location based on a travel direction of the vehicle and a change in time at which the transponder is recognized.

When the at least one program fails to receive GPS coordinates of a current location, it may check whether the vehicle enters a tunnel and generate the mobile ID group information including a tunnel ID of the tunnel.

Then, when the server 200 of the control center checks the tunnel ID in the mobile ID group information, the server may photograph the inside of the tunnel corresponding to the tunnel ID using a CCTV pre-installed inside the tunnel, and output an image obtained by photographing the inside of the tunnel through the display device.

The at least one program may generate mobile ID group information further including a cell ID preset in a base station area close to a location where the risky situation occurs.

Here, when the server 200 of the control center checks the cell ID in the mobile ID group information, the server may set neighboring cell IDs of at least one base station area neighboring the base station area of the cell ID as a neighboring cell ID group, and generate the risk information. Then, the server 200 of the control center may transmit the risk information to terminal devices of vehicles located in the base station area corresponding to the neighboring cell ID group.

In this case, the server 200 of the control center may select a subscriber terminal device pre-stored therein as a risk information announcement target, and transmit the risk information to the subscriber terminal device.

In this case, the server 200 of the control center may select a subscriber terminal device of a related organization or company operatively connected therewith as the risk information announcement target, and transmit the risk information to the subscriber terminal device.

That is, according to the apparatus and method for providing risk information using mobile ID group information according to the embodiment of the present disclosure, even when navigation is not executed or the vehicle is in a tunnel where GPS reception is not allowed, the risk information terminal providing device 100 that recognizes a mobile ID group may automatically detect risky situations such as wrong-way driving, an accident causing an unconscious state during driving, and stopping in a tunnel and automatically transmit corresponding mobile ID group information to the server 200 of the control center without presenting a travel path, a current location, or the like through a screen or by voice.

The risk information announcing terminal device 300 receiving a mobile ID group for each risky situation, such as wrong-way driving, an accident causing an unconscious state, breakdown, stopping in a tunnel, or road work disseminated from the server 200 of the traffic control center may provide a customized real-time mobile automatic guidance system that matches the mobile ID group in the received risk information, and automatically announce a risk type, a location of the risk, a distance to the risk location, a countermeasure, and the like by voice and through a screen only when the ID group is identical. Thereby, accidents and damage may be prevented.

As described above, an apparatus and method for providing risk information using mobile ID group information according to an embodiment of the present disclosure are not limited to the configuration and method of the embodiments described above. Various modifications may be made by selectively combining all or part of the embodiments.

## Claims

1. An apparatus for providing risk information, comprising:
one or more processors; and
an execution memory configured to store at least one program executed by the one or more processors,
wherein the at least one program detects a risky situation in traffic, recognizes a type of the risky situation, generates mobile ID group information including information about a location of the risky situation, and transmits the mobile ID group information to a server of a control center,
wherein the server of the control center generates risk information based on the mobile ID group information, and selects a terminal device for transmission of the risk information, and transmits the risk information to the terminal device.

2. The apparatus of claim 1, wherein the at least one program detects the risky situation based on at least one of a travel direction of a vehicle, a travel speed of the vehicle, and a change in time at which a transponder ID pre-installed on a road is recognized, and determines the type of the risky situation.

3. The apparatus of claim 2, wherein the at least one program matches a plurality of IDs for indicating information about the location of the risky situation corresponding to the type of the risky situation according to a preset rule and generates the mobile ID group information.

4. The risk information according to claim 3, wherein the at least one program recognizes the transponder ID from a transponder pre-installed on the road, and generates the mobile ID group information further including the transponder ID.

5. The apparatus of claim 4, wherein the server of the control center photographs a location corresponding to at least one ID included in the mobile ID group information using a CCTV installed on the road adjacent to GPS coordinates included in the mobile ID group information, and outputs an image obtained by photographing the location through a display device.

6. The apparatus of claim 4, wherein, upon failing to receive GPS coordinates of a current location, the at least one program generates the mobile ID group information by calculating the current location based on the travel direction of the vehicle and the change in time at which the transponder is recognized.

7. The apparatus of claim 6, wherein, upon failing to receive the GPS coordinates of the current location, the at least one program checks whether the vehicle enters a tunnel and generates the mobile ID group information including a tunnel ID of the tunnel.

8. The apparatus of claim 7, wherein, when the server of the control center checks the tunnel ID in the mobile ID group information, the server photographs an inside of the tunnel corresponding to the tunnel ID using a CCTV pre-installed inside the tunnel, and outputs an image obtained by photographing the inside of the tunnel through a display device.

9. The apparatus of claim 3, wherein the at least one program generates the mobile ID group information further including a preset cell ID in a base station area close to a location of the risky situation.

10. The apparatus of claim 9, wherein, when the server of the control center checks the cell ID in the mobile ID group information, the server sets neighboring cell IDs of at least one base station area neighboring the base station area of the cell ID as a neighboring cell ID group, and generates the risk information.

11. The apparatus of claim 10, wherein the server of the control center selects a terminal device located in the base station area corresponding to the neighboring cell ID group as a risk information announcement target, and transmits the risk information thereto.

12. A method for providing risk information by a risk information providing apparatus, the method comprising:
detecting a risky situation in traffic and recognizing a type of the risky situation;
generating mobile ID group information including information about a location of the risky situation;
transmitting the mobile ID group information to a server of a control center;
generating, by the server of the control center, risk information based on the mobile ID group information; and
selecting a terminal device for transmission of the risk information and transmitting the risk information to the terminal device.

13. The method of claim 12, wherein the recognizing of the type of the risky situation comprises:
Detecting the risky situation based on at least one of a travel direction of a vehicle, a travel speed of the vehicle, and a change in time at which a transponder ID pre-installed on a road is recognized and determining the type of the risky situation.

14. The method of claim 12, wherein the generating of the mobile ID group information comprises:
matching a plurality of IDs for indicating information about the location of the risky situation corresponding to the type of the risky situation according to a preset rule and generating the mobile ID group information.

15. The method of claim 14, wherein the generating of the mobile ID group information comprises:
recognizing the transponder ID from a transponder pre-installed on the road and generating the mobile ID group information further including the transponder ID.

16. The method of claim 14, wherein the generating of the risk information comprises:
photographing, by the server of the control center, a location corresponding to at least one ID included in the mobile ID group information using a CCTV installed on the road adjacent to GPS coordinates included in the mobile ID group information; and
outputting, by the server of the control center, an image obtained by photographing the location through a display device.

17. The method of claim 16, wherein the generating of the mobile ID group information comprises:
when reception of GPS coordinates of a current location fails, calculating the current location based on the travel direction of the vehicle and the change in time at which the transponder is recognized and generating the mobile ID group information.

18. The method of claim 17, wherein the generating of the mobile ID group information comprises:
when the reception of the GPS coordinates of the current location fails, checking whether the vehicle enters a tunnel and generating the mobile ID group information including a tunnel ID of the tunnel.

19. The method of claim 18, wherein the generating of the risk information comprises:
when the tunnel ID is checked in the mobile ID group information, photographing, by the server of the control center, an inside of the tunnel corresponding to the tunnel ID using a CCTV pre-installed inside the tunnel; and
outputting, by the server, an image obtained by photographing the inside of the tunnel through a display device.

20. The risk information of claim 14, wherein the generating of the mobile ID group information comprises:
generating the mobile ID group information further including a preset cell ID in a base station area close to a location of the risky situation.

21. The method of claim 20, wherein the generating of the risk information comprises:
when the cell ID is checked in the mobile ID group information, setting, by the server of the control center, neighboring cell IDs of at least one base station area neighboring the base station area of the cell ID as a neighboring cell ID group and generating the risk information.

22. The risk information of claim 21, wherein the transmitting of the risk information comprises:
selecting a terminal device located in the base station area corresponding to the neighboring cell ID group as a risk information announcement target and transmitting the risk information thereto.

23. The method of claim 14, wherein the transmitting of the risk information comprises:
selecting a subscriber terminal device pre-stored in the server of the control center as a risk information announcement target and transmitting the risk information to the subscriber terminal device.

24. The method of claim 14, wherein the transmitting of the risk information comprises:
selecting a subscriber terminal device of a related organization or a company operatively connected with the server of the control center as the risk information announcement target and transmitting the risk information to the subscriber terminal device.
